(19) Europäisches Patentamt / European Patent Office / Office européen des brevets

(11) **EP 4 715 594 A1**

(12) **EUROPEAN PATENT APPLICATION**

(43) Date of publication:
**25.03.2026 Bulletin 2026/13**

(51) International Patent Classification (IPC):
***G06F 9/50*** *(2006.01)*

(21) Application number: **25202207.4**

(22) Date of filing: **15.09.2025**

(52) Cooperative Patent Classification (CPC):
**G06F 9/5072;** G06F 2209/5019; G06F 2209/509

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.09.2024 IN 202421071881**

(71) Applicant: **Tata Consultancy Services Limited
Mumbai, Maharashtra 400 021 (IN)**

(72) Inventors:
- **SAHA, Ratul Kishore**
  **400607 Thane, Maharashtra (IN)**
- **CHAHAL, Dheeraj**
  **411006 Pune, Maharashtra (IN)**
- **SINGHAL, Rekha**
  **New York, 10044 (US)**
- **NAMBIAR, Manoj Karunakaran**
  **400607 Thane, Maharashtra (IN)**

(74) Representative: **Goddar, Heinz J.
Boehmert & Boehmert
Anwaltspartnerschaft mbB
Pettenkoferstrasse 22
80336 München (DE)**

(54) **WORKLOAD DEPLOYMENT IN A CONTENT GUIDED AND SERVICE LEVEL AGREEMENT (SLA) AWARE EDGE-CLOUD ARCHITECTURE**

(57) Proliferation of edge devices has significantly advanced technologies in sectors such as autonomous driving and surveillance. However, deploying machine learning models on these resource-constrained devices presents challenges including scalability and managing unpredictable workloads thereby affecting real-time performance in edge-only environments. The present disclosure discloses a method and system for workload deployment in a content guided and service level agreement (SLA) aware edge-cloud architecture. In the present disclosure, a camera feed content-guided load balancing technique is provided that dynamically manages workloads between edge and cloud. Features are extracted from an incoming camera feed to perform load-balancing process efficiently. The load balancer determines a maximum number of concurrent feeds for processing at the edge, with the remaining feeds handled by the cloud based on content of the incoming camera feed. Additionally, a cost model to estimate expenses of deploying the edge-cloud architecture in real-world scenarios with dynamic workloads is provided.

Receiving, via on or more hardware processors, a plurality of real time incoming data acquired by one or more camera sensors across a plurality of locations for workload deployment — 202

Extracting, via the one or more hardware processors, a plurality of features from the plurality of real time incoming data using one or more feature extraction techniques — 204

Identifying, via the one or more hardware processors, one or more objects in the plurality of real time incoming data based on the plurality of features — 206

classifying, via the one or more hardware processors, the plurality of real time incoming data into one of (i) a first classification category and (ii) a second classification category, based on a size parameter of each of the one or more objects using one or more classification approaches — 208

inputting, via the one or more hardware processors, the plurality of real time incoming data classified as one of (i) the first classification category and (ii) the second classification category to an edge-cloud architecture — 210

dynamically allocating, via the one or more hardware processors, the plurality of real time incoming data to one of: (a) an edge, and (b) a cloud network comprised in the edge-cloud architecture for the workload deployment, using a load balancer based on (i) the first classification category and (ii) the second classification category of the plurality of real time incoming data, wherein the load balancer is a regression model characterized as: $Y_c = \delta \times L_{edge}^3 + \alpha \times L_{edge}^2 + \beta \times L_{edge} + \gamma$, where $Y_c$ represents maximum number of concurrent operations supported by the edge with a latency less than $L_{edge}$, $\delta$, $\alpha$, $\beta$, and $\gamma$ are load balancing parameters, and wherein dynamic allocation of the plurality of real time incoming data using the load balancer ensures that optimal processing of the plurality of real time incoming data is performed with optimum resource utilization while satisfying one or more user specified objectives — 212

200

**FIG. 4**

EP 4 715 594 A1

**Description**

CROSS-REFERENCE TO RELATED APPLICATIONS AND PRIORITY

The present application claims priority to Indian application no. 202421071881, filed on September 23, 2024.

TECHNICAL FIELD

The disclosure herein generally relates to the field of workload deployment, and, more particularly, to workload deployment in a content guided and service level agreement (SLA) aware edge-cloud architecture.

BACKGROUND

With growing demands of Multi-Object Tracking (MOT) in smart city applications such as video surveillance and traffic management, there is a necessity to have robust technological solutions. These smart city systems utilize advanced surveillance technology to improve public safety and enhance quality of life for residents by enabling functionalities like object tracking and suspicious activity detection through video-based systems. In various edge applications such as surveillance, robotics, and autonomous vehicles, latency performance is critical.

Typically, lightweight deep learning models perform adequately on edge devices for single inference tasks. However, these models struggle under the load of concurrent requests, often leading to Service Level Agreement violations due to resource-constrained nature of edge devices and hence scalability remains a significant challenge in edge-only deployment settings. Also, deployment of Deep Learning models at the edge entails high computational power and energy consumption, resulting in diminished system reliability and increased maintenance challenges. Further, traditional workload deployment on high-performance hardware is not viable for real-time processing due to high costs and inefficiencies at the edge.

SUMMARY

Embodiments of the present disclosure present technological improvements as solutions to one or more of the above-mentioned technical problems recognized by the inventors in conventional systems. For example, in one embodiment, a processor implemented method is provided. The processor implemented method for assessing cloud readiness of a high performance computing (HPC) application to be migrated on a cloud platform, comprising: receiving, via on or more hardware processors, a plurality of real time incoming data acquired by one or more camera sensors across a plurality of locations for workload deployment; extracting, via the one or more hardware processors, a plurality of features from the plurality of real time incoming data using one or more feature extraction techniques; identifying, via the one or more hardware processors, one or more objects in the plurality of real time incoming data based on the plurality of features; classifying, via the one or more hardware processors, the plurality of real time incoming data into one of (i) a first classification category, and (ii) a second classification category, based on a size parameter of each of the one or more objects using one or more classification approaches; inputting, via the one or more hardware processors, the plurality of real time incoming data classified as one of (i) the first classification category and (ii) the second classification category to an edge-cloud architecture; and dynamically allocating, via the one or more hardware processors, the plurality of real time incoming data to one of: (a) an edge, and (b) a cloud network comprised in the edge-cloud architecture for the workload deployment, using a load balancer based on (i) the first classification category and (ii) the second classification category of the plurality of real time incoming data, wherein the load balancer is a regression model characterized as:

$$Y_c = \delta \times L_{edge}^3 + \alpha \times L_{edge}^2 + \beta \times L_{edge} + \gamma$$

, where $Y_c$ represents maximum number of concurrent operations supported by the edge with a latency less than $L_{edge}$, $\delta$, $\alpha$, $\beta$, and $\gamma$ are load balancing parameters, and wherein dynamic allocation of the plurality of real time incoming data using the load balancer ensures that optimal processing of the plurality of real time incoming data is performed with optimum resource utilization while satisfying one or more user specified objectives.

In another aspect, a system for assessing cloud readiness of a high performance computing (HPC) application to be migrated on a cloud platform is provided. The system comprising a memory storing instructions; one or more communication interfaces; and one or more hardware processors coupled to the memory via the one or more communication interfaces, wherein the one or more hardware processors are configured by the instructions to: receive a plurality of real time incoming data acquired by one or more camera sensors across a plurality of locations for workload deployment; extract a plurality of features from the plurality of real time incoming data using one or more feature extraction techniques; identify one or more objects in the plurality of real time incoming data based on the plurality of features; classify the plurality of real time incoming data into one of (i) a first classification category and (ii) a second classification category, based on a size parameter of each of the one or more objects using one or more classification approaches; input the plurality of real time incoming data classified as one of (i) the first classification category and (ii) the second classification category to an edge-cloud architecture; and dynamically allocate the plurality of real time incoming data to one of: (a) an edge, and (b) a cloud network comprised in the edge-cloud architecture for the workload deployment, using a load balancer based on (i) the first classification category and (ii) the second classification category of the plurality of real time incoming data, wherein the load balancer is a regression model characterized as: $Y_c = \delta \times L_{edge}^3 + \alpha \times L_{edge}^2 + \beta \times L_{edge} + \gamma$ , where $Y_c$ represents maximum number of concurrent operations supported by the edge with a latency less than $L_{edge}$, $\delta$, $\alpha$, $\beta$, and $\gamma$ are load balancing parameters, and wherein dynamic allocation of the plurality of real time incoming data using the load balancer ensures that optimal processing of the plurality of real time incoming data is performed with optimum resource utilization while satisfying one or more user specified objectives.

**In** yet another aspect, a non-transitory computer readable medium for assessing cloud readiness of a high performance computing (HPC) application to be migrated on a cloud platform is provided. The non-transitory computer readable medium are configured by instructions for receiving a plurality of real time incoming data acquired by one or more camera sensors across a plurality of locations for workload deployment; extracting a plurality of features from the plurality of real time incoming data using one or more feature extraction techniques; identifying one or more objects in the plurality of real time incoming data based on the plurality of features; classifying the plurality of real time incoming data into one of (i) a first classification category, and (ii) a second classification category, based on a size parameter of each of the one or more objects using one or more classification approaches; inputting the plurality of real time incoming data classified as one of (i) the first classification category and (ii) the second classification category to an edge-cloud architecture; and dynamically allocating the plurality of real time incoming data to one of: (a) an edge, and (b) a cloud network comprised in the edge-cloud architecture for the workload deployment, using a load balancer based on (i) the first classification category and (ii) the second classification category of the plurality of real time incoming data, wherein the load balancer is a regression model characterized as: $Y_c = \delta \times L_{edge}^3 + \alpha \times L_{edge}^2 + \beta \times L_{edge} + \gamma$ , where $Y_c$ represents maximum number of concurrent operations supported by the edge with a latency less than $L_{edge}$, $\delta$, $\alpha$, $\beta$, and $\gamma$ are load balancing parameters, and wherein dynamic allocation of the plurality of real time incoming data using the load balancer ensures that optimal processing of the plurality of real time incoming data is performed with optimum resource utilization while satisfying one or more user specified objectives.

In accordance with an embodiment of the present disclosure, training steps for the trained machine learning engine comprises: the step of classifying the plurality of real time incoming data enables content guided resource utilization to identify an optimal processing location in the edge-cloud architecture.

In accordance with an embodiment of the present disclosure, the one or more user specified objectives include at least one (i) a service level agreement (SLA), (ii) a minimum response time, (iii) one or more latency constraints set by the SLA, and (iv) a minimum cost of the workload deployment.

In accordance with an embodiment of the present disclosure, the edge comprises one or more lightweight models.

In accordance with an embodiment of the present disclosure, the cloud network comprises one or more heavyweight models that enable fast processing of the plurality of real time incoming data.

In accordance with an embodiment of the present disclosure, the edge-cloud architecture is scalable and cost-effective.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for workload deployment in a content guided and service level agreement (SLA) aware edge-cloud architecture, according to some embodiments of the present disclosure.

FIG. 2, with reference to FIG. 1, is a functional block diagram for workload deployment in a content guided and service level agreement (SLA) aware edge-cloud architecture, using the system of FIG. 1, according to some embodiments of the present disclosure.

FIG. 3, with reference to FIG. 1, illustrates an internal architectural view of the content guided and service level agreement (SLA) aware edge-cloud architecture for workload deployment, using the system of FIG. 1, according to some embodiments of the present disclosure.

FIG. 4, with reference to FIGS. 1 through 3, illustrates an exemplary flow diagram illustrating a method for workload deployment in a content guided and service level agreement (SLA) aware edge-cloud architecture, using the system of FIG. 1, in accordance with some embodiments of the present disclosure.

FIGS. 5A through 5D illustrate features extraction process and classification process on a sample use case example for workload deployment in a content guided and service level agreement (SLA) aware edge-cloud architecture, in accordance with some embodiments of the present disclosure.

FIG. 6 depicts graphical representations illustrating results of edge-only execution study system in terms of latency per frame and concurrency for workload deployment in a content guided and service level agreement (SLA) aware edge-cloud architecture, according to some embodiments of the present disclosure.

FIG. 7 depicts graphical representations illustrating service level agreement (SLA)-aware execution results of the edge-cloud architecture in terms of average latency per frame and frame number for 15 concurrent workloads deployment, according to some embodiments of the present disclosure.

FIG. 8 depicts graphical representations illustrating load balancing between edge and cloud-based on incoming dynamic camera feed load for workloads deployment in a content guided and service level agreement (SLA) aware edge-cloud architecture, according to some embodiments of the present disclosure.

FIG. 9 depicts graphical representations illustrating estimated and actual cost analysis of single Camera Feed multi-camera sensor-based multi-object tracking (MCS-MOT) algorithm for workload deployment in a content guided and service level agreement (SLA) aware edge-cloud architecture, according to some embodiments of the present disclosure.

FIG. 10 depicts graphical representations illustrating per-frame latency and on-demand cost per hour for varying concurrency observed with three different types of EC2 instances I, II, and III for workload deployment in a content guided and service level agreement (SLA) aware edge-cloud architecture, according to some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

The proliferation of edge devices has significantly advanced technologies in sectors such as autonomous driving and surveillance. However, deploying machine learning models on these resource-constrained devices presents challenges, including scalability and managing unpredictable workloads, which often hinder real-time performance (both latency and throughput) in edge-only environments. To address these issues, a potential approach is to deploy on an edge-cloud ecosystem, however, it may hinder latency due to communication delay between edge and cloud. Multi-Object Tracking (MOT) is in demand for smart city applications such as video surveillance and traffic management. Traditional multi object tracking (MOT) methods, especially those using resource-heavy deep learning models, often suffer from slow performance on standard computers due to sequential frame processing. This issue is even more pronounced on edge devices, which lack the computational power to handle the high demands of these algorithms, particularly with high frame rate videos. Although lightweight models have been developed for edge devices, they struggle with dynamically analyzing videos containing small objects. Additionally, larger models require high-end computational power and accelerators, which are impractical for resource-limited edge devices. Furthermore, scalability on edge devices is not cost-effective and unsuitable for dynamic loads in real-world scenarios. Thus, there is a need for effective workload deployment of MOT models on edge devices.

On the other end of the spectrum, cloud service providers offer flexible and scalable infrastructure capable of handling multiple concurrent requests. This shift not only enhances scalability but also ensures more reliable performance across various applications, making it a strategic move towards more robust and efficient edge computing frameworks. Moreover, cost integration of the cloud services is flexible in nature while maintaining the workload to be balanced. This strategic integration of edge and cloud ensures that the systems are capable of adapting to varying workload demands effectively, thereby supporting more complex and demanding applications in smart city environments and beyond. This seamless fusion of edge and cloud computing frameworks marks a significant advancement in deploying real-time, efficient, and scalable multi-object tracking systems across diverse operational scenarios.

The present disclosure addresses the unresolved problems of the conventional approaches by providing an SLA-aware edge-cloud architecture designed to support real-time multi-camera sensor-based multi-object tracking (MCS-MOT) applications based on incoming content such as camera feed content for real-time use cases. Embodiments of the present disclosure provide a method and system for workload deployment in a content guided and service level agreement (SLA) aware edge-cloud architecture. In the present disclosure, a cloud service Message Queuing Telemetry Transport (MQTT) protocol powered by 5G internet is used, for communication to manage the latency. Further, a scalable edge-cloud ecosystem is provided that is specifically designed for a Multi-Camera Sensor-based Multi-Object Tracking (MCS-MOT) pipeline within industrial deployment contexts, ensuring compliance with Service Level Agreements (SLAs). In the method of the present disclosure, camera feed content-guided load balancing technique is provided that dynamically manages workloads between edge and cloud. Features are extracted from incoming camera feed content to inform the load-balancing process efficiently. The load balancer determines the maximum number of concurrent feeds that can be processed at the edge, with the remaining feeds handled by the cloud based on the content of the camera feed. Additionally, a cost model to estimate the expenses of deploying the edge-cloud ecosystem in real-world scenarios with dynamic workloads.

In other words, the present disclosure provides an SLA-compliant, multi-camera sensor-based MOT system, increasingly vital in the era of edge-cloud ecosystems. The system of the present disclosure provides a sophisticated edge-cloud architecture that combines the immediate processing capabilities of edge devices with robust computational power of cloud services. This merger is crucial for managing intensive data processing demands of real-time MOT systems without limitations of edge-only deployments. The integrated system of the present disclosure ensures that workload deployments meet SLA requirements while adapting to dynamic processing demands, making it ideal for real-time deployment.

In the method of the present disclosure, at first, feature extraction is performed to identify objects in live camera feeds. The content of live camera feeds can vary significantly due to factors like camera angle and object presence, and/or the like. Therefore, for dynamic camera feeds, it is essential to execute the MCS-MOT method with prior knowledge of the camera feed content. Further, the live camera feeds are classified into two categories based on object size such as small objects and large objects using the extracted features. This classification helps in determining an optimal processing location either at the edge or in the cloud. For example, running a content-agnostic MCS-MOT algorithm with no objects present wastes edge and cloud resources. This classification helps determine the optimal processing location either at the edge or in the cloud. Camera feeds with large or simple objects are processed directly at the edge using lightweight models to ensure rapid execution and minimal latency. Conversely, more complex camera feeds, especially those with small or intricate objects, are routed to the cloud where more robust models like are employed to ensure high accuracy in object detection and tracking within SLA. To maintain SLA objectives and optimize resource utilization, an SLA-based load balancer is used that dynamically allocates video feeds between the edge and the cloud based on incoming camera feed content to the edge device. This ensures that the edge-cloud ecosystem runs simultaneously to maintain a suitable balance between edge and cloud resources. This integrated edge-cloud approach not only enhances the flexibility and efficiency of deploying real-time surveillance systems but also ensures that the network adheres to predefined SLA parameters, thereby optimizing overall performance and cost-effectiveness of an MCS-MOT pipeline. **In** the edge-cloud system, the cloud counterpart facilitates robust and efficient data handling.

The system of the present disclosure ensures real-time data streaming without bottlenecks, allowing for the simultaneous handling of large data streams. Further, cloud capabilities through edge devices are executed, enabling local function execution and secure cloud interaction, even in offline scenarios. For data storage and accessibility, scalable and secure solutions are provided, while scalable instances efficiently handle execution of the MCS-MOT algorithm under varying loads in alignment with SLA objectives. Additionally, a cost estimation model is designed to optimize financial efficiency when deploying the system of the present disclosure in the cloud. This cost estimation model focuses on scalable costs in real-time deployment scenarios. This architecture not only optimizes resource allocation through effective load balancing but also enhances scalability and flexibility, ensuring that the system meets stringent SLA requirements. This sophisticated use of edge and cloud resources offers a robust and scalable solution to the challenges of modern surveillance systems. Further, the system of the present disclosure enables enhancing the processing of diverse video feeds captured by surveillance cameras across smart cities, which vary significantly in scene dynamics and objects. More specifically, the present disclosure provides the following:

1. An edge-cloud deployment ecosystem enhanced with capabilities orchestrating for Multi-Camera sensor-based multi-object tracking applications powered with 5G.

2. An efficient camera feed content-aware and light-weight SLA-based load balancing strategy designed to optimize workload distribution between edge and cloud environments, tailored to the dynamics of incoming camera feeds and requests.

3. A complete scalable edge-cloud architecture alongside a mathematical cost estimation model to facilitate realistic deployments within industrial settings.

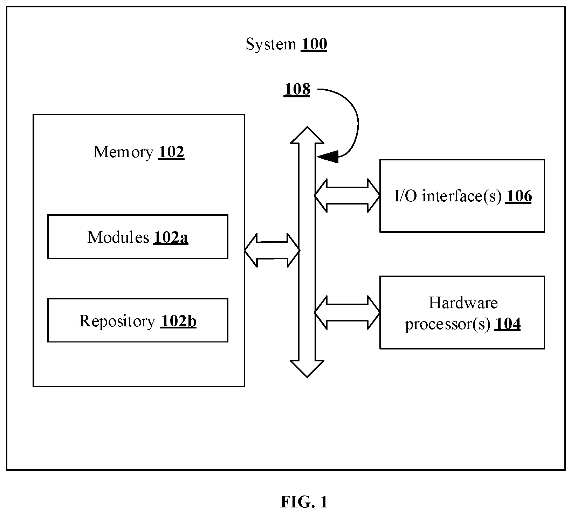

Referring now to the drawings, and more particularly to FIGS. 1 through 10, where similar reference characters denote corresponding features consistently throughout the figures, there are shown preferred embodiments, and these embodiments are described in the context of the following exemplary system and/or method.

FIG. 1 illustrates an exemplary system for workload deployment in a content guided and service level agreement (SLA) aware edge-cloud architecture, according to some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

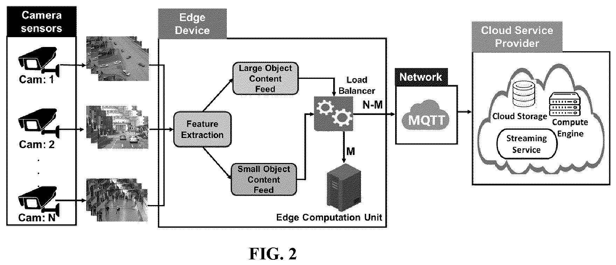

FIG. 2, with reference to FIG. 1, is a functional block diagram for workload deployment in a content guided and service level agreement (SLA) aware edge-cloud architecture, using the system 100 of FIG. 1, according to some embodiments of the present disclosure. As shown in FIG. 2, the edge-cloud architecture of the present disclosure comprises an edge device connected to a cloud network through the cloud service Message Queuing Telemetry Transport (MQTT) protocol powered by 5G internet which is used for communication to manage the latency for workload deployment.

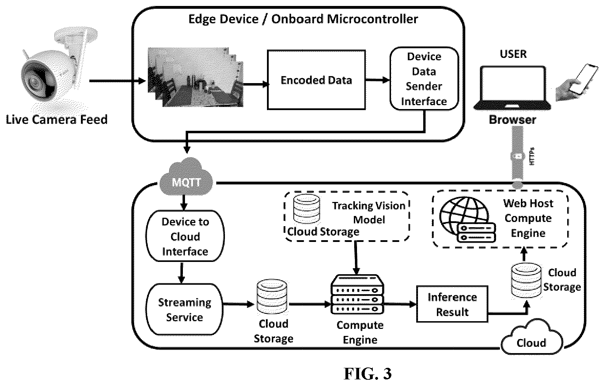

FIG. 3, with reference to FIG. 1, illustrates an internal architectural view of the content guided and service level agreement (SLA) aware edge-cloud architecture for workload deployment, using the system of FIG. 1, according to some embodiments of the present disclosure. As shown in FIG. 3, in the edge-cloud architecture of the present disclosure, the cloud counterpart is constructed using a cloud streaming service framework such as Amazon Web Services (AWS®) framework, facilitating robust and efficient data handling. A cloud streaming service such as AWS® Kinesis Firehose ensures real-time data streaming without bottlenecks, allowing for the simultaneous handling of large data streams. A cloud IoT service such as AWS® Greengrass extends cloud capabilities through edge devices, enabling local function execution and secure cloud interaction, even in offline scenarios. For data storage and accessibility, a cloud object storage service such as Amazon® S3 offers scalable and secure solutions, while a scalable cloud compute service such as AWS® EC2 instances efficiently handle execution of an MCS-MOT algorithm under varying loads in alignment with SLA objectives.

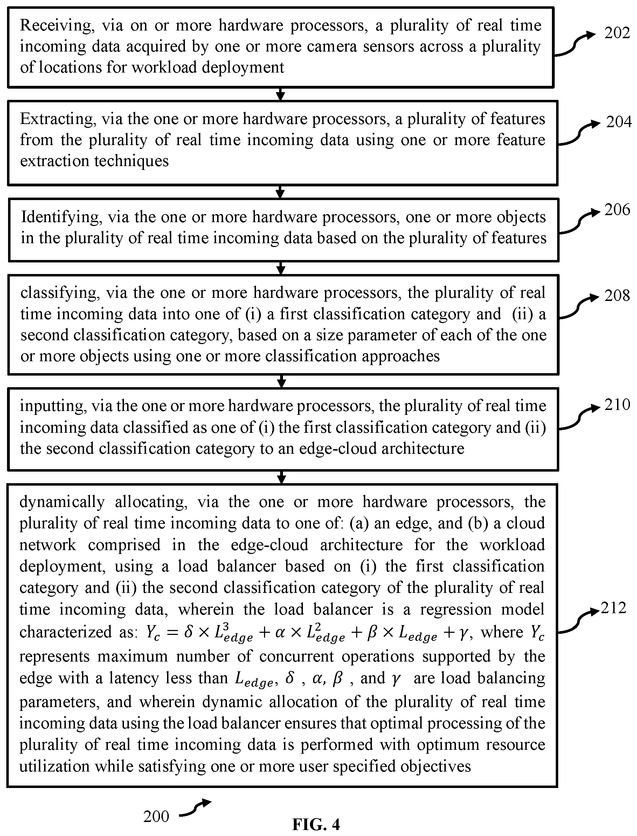

FIG. 4, with reference to FIGS. 1 through 3, illustrates an exemplary flow diagram illustrating a method for workload deployment in a content guided and service level agreement (SLA) aware edge-cloud architecture, using the system of FIG. 1, in accordance with some embodiments of the present disclosure.

Referring to FIG. 4, in an embodiment, the system(s) 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the block diagram of FIG. 2, the architectural diagram of FIG. 3, the flow diagram as depicted in FIG. 4, and one or more examples. Although steps of the method 200 including process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

In an embodiment, at step 202 of the present disclosure, one or more hardware processors 104 are configured to receive a plurality of real time incoming data acquired by one or more camera sensors across a plurality of locations for workload deployment. The plurality of real time incoming data may include but is not limited to a camera feed content, a video feed content, and/or the like for real-time use cases, where the real time use case may include surveillance across smart cities using surveillance cameras capturing the content which may vary significantly in scene dynamics and objects. In context of the present disclosure, the expressions 'feed' can be interchangeably used as 'camera feed', live feed, and 'video feed' throughout the description.

At step 204 of the present disclosure, the one or more hardware processors 104 are configured to extract a plurality of features from the plurality of real time incoming data using one or more feature extraction techniques. The content of live camera feeds can vary significantly due to factors like camera angle and object presence, etc. Therefore, for dynamic feeds, it is essential to execute the multi-camera sensor-based multi-object tracking (MCS-MOT) methodology with prior knowledge. The one or more feature extraction techniques may include a lightweight Canny edge detection technique that analyzes and classifies image content based on structural characteristics. The lightweight Canny edge detection technique analyzes and classifies image content based on structural characteristics. This lightweight Canny edge detection technique is adept at identifying sharp discontinuities within an image, which effectively delineates structural boundaries. The process begins by converting an image of an input camera feed to a grayscale image, which simplifies the complexity of the data and enhances effectiveness of edge detection. Next, a canny edge detection algorithm is applied for detecting a broad range of edges to the grayscale images. Once the edges are highlighted, the feature extraction is quantified by counting the number of edge pixels present in each image within a Region of Interest(RoI).

Further, at step 206 of the present disclosure, the one or more hardware processors 104 are configured to identify one or more objects in the plurality of real time incoming data based on the plurality of features. In scenarios, where no objects are present, no features are detected in the region of interest (RoI). This metric is critical as it forms the basis for classification. A predefined threshold is set for the number of edge pixels, which allows to determine whether an image predominantly contains larger or smaller objects.

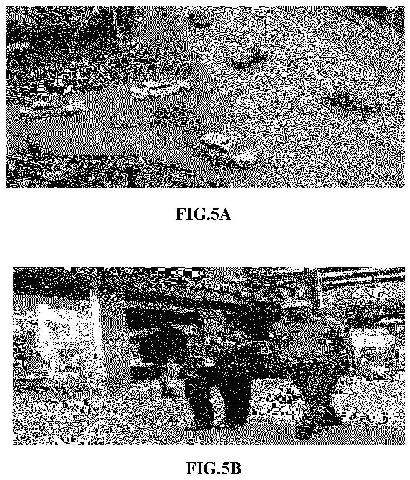

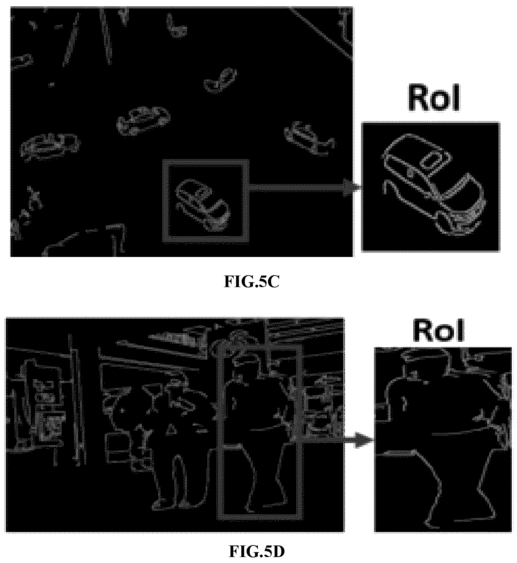

Furthermore, at step 208 of the present disclosure, the one or more hardware processors 104 are configured to classify the plurality of real time incoming data into one of (i) a first classification category and (ii) a second classification category, based on a size parameter of each of the one or more objects using one or more classification approaches. In an embodiment, the first classification category includes feeds with large objects and the second classification category includes feeds with small objects. FIGS. 5A through 5D illustrate features extraction process and classification process on a sample use case example for workload deployment in a content guided and service level agreement (SLA) aware edge-cloud architecture, in accordance with some embodiments of the present disclosure. FIGS. 5A and 5B show image frames containing small and large objects of two incoming camera feeds, respectively. FIG. 5C and FIG. 5D show the features extracted from the image frames using the one or more feature extraction technique. As shown in FIGS. 5A through 5D, images with a count of edge pixels below the predefined threshold are classified as containing smaller objects, whereas those with counts above the predefined threshold indicate the presence of larger objects. The predefined threshold is 10k pixels which was calculated heuristically. However, the predefined threshold value may change based on content of the feeds.

Referring to FIG. 4, at step 210 of the present disclosure, the one or more hardware processors 104 are configured to input the plurality of real time incoming data classified as one of (i) the first classification category and (ii) the second classification category to an edge-cloud architecture. In context of the present disclosure, the expressions 'edge' and 'edge device' are interchangeable used throughout the description. Further, the expressions 'cloud' and 'cloud network' are interchangeably used throughout the description. In an embodiment, the edge comprises one or more lightweight models. The one more lightweight models may comprise but are not limited to deep learning based multi-object tracking (MOT) models. The cloud network comprises one or more heavyweight models that enable fast processing of the plurality of real time incoming data. In an embodiment, the edge-cloud architecture is scalable and cost-effective.

Further, at step 212 of the present disclosure, the one or more hardware processors 104 are configured to dynamically allocate the plurality of real time incoming data to one of: (a) an edge, and (b) a cloud network comprised in the edge-cloud architecture for the workload deployment, using a load balancer based on (i) the first classification category and (ii) the second classification category of the plurality of real time incoming data. The load balancer is a regression model characterized as: $Y_c = \delta \times L_{edge}^3 + \alpha \times L_{edge}^2 + \beta \times L_{edge} + \gamma$ , where $Y_c$ represents maximum number of concurrent operations supported by the edge with a latency less than $L_{edge}$, $\delta$, $\alpha$, $\beta$, and $\gamma$ are load balancing parameters. In an embodiment, dynamic allocation of the plurality of real time incoming data using the load balancer ensures that optimal processing of the plurality of real time incoming data is performed with optimum resource utilization while satisfying one or more user specified objectives. The one or more user specified objectives include at least one (i) a service level agreement (SLA), (ii) a minimum response time, (iii) one or more latency constraints set by the SLA, and (iv) a minimum cost of the workload deployment. In an embodiment, the one or more latency constraints set by the SLA may include but are not limited to latency at edge, communication latency between edge and cloud, and computation latency within the cloud.

The steps 208 through 212 are further better understood by way of the following description provided as an exemplary explanation.

In an embodiment, the step of classifying the plurality of real time incoming data enables content guided resource utilization to identify an optimal processing location in the edge-cloud architecture. In other words, this classification helps determine an optimal processing location either at the edge or in the cloud. For example, running a content-agnostic MCS-MOT algorithm with no objects present wastes edge and cloud resources. Feeds with large or simple objects are processed directly at the edge using lightweight models such as YOLOv8n-DeepSORT to ensure rapid execution and minimal latency. Conversely, more complex feeds, especially those with small or intricate objects, are routed to the cloud where more robust heavyweight models like YOLOv8x-DeepSORT are employed to ensure high accuracy in object detection and tracking within SLA.

To maintain SLA objectives and optimize resource utilization, the load balancer which is SLA aware is used that dynamically allocates video feeds between the edge and the cloud based on incoming camera feed content to the edge device. This ensures that the edge-cloud architecture of the system 100 runs simultaneously to maintain a suitable balance between edge and cloud resources. This integrated edge-cloud approach not only enhances the flexibility and efficiency of deploying real-time surveillance systems but also ensures that the network adheres to predefined SLA parameters, thereby optimizing the overall performance and cost-effectiveness of the method of the present disclosure.

In the edge-cloud architecture of the present disclosure, three critical factors dictating end-to-end latency are recognized that include edge latency ($L_{edge}$), communication latency between edge and cloud ($L_{com}$), and computation latency within the cloud ($L_{cloud}$). Equation (1) below succinctly encapsulates the total latency for the method of the present disclosure as:

$$L_t = L_{edge} + L_{com} + L_{cloud} \ (1)$$

While equation (1) highlights the significance of these factors, it's crucial to note their impact when the entire algorithm operates solely on the edge. When the data is being processed at the edge device only the other latency (i.e., $L_{com}$, $L_{cloud}$) becomes zero. The whole latency equation operates when the edge cloud runs as a co-processing scenario.

To ensure scalability and compliance with the one or more user specified SLA objectives, a dynamic SLA-based load-balancing technique is developed that intelligently allocates processing tasks between edge and cloud environments based on the camera feed content. This approach adapts to fluctuating workloads and varying resource availabilities. Consider a scenario where multiple camera feeds are streamed to an edge device. Not all feeds contain objects that need to be tracked by an MOT algorithm, so the computational load highly depends on the content of the camera feed. If a feed does not contain any objects, the load is considered zero. This dynamic load concept motivates a design of an intelligent load balancing system that adjusts based on the content of the camera feeds. Therefore, after the feature extraction, the load balancer assesses each feed's processing needs and allocates resources appropriately. When the edge device can efficiently process a subset of these feeds containing large object features within the one or more latency constraints set by the SLA, it does so locally. Excess feeds, which exceed the edge device's capacity, are smartly offloaded to the cloud where more extensive computational resources are available. To manage this balancing act, a regression model is developed to predict the number of concurrent operations that can be handled by the edge device without breaching SLA thresholds. The relationship between concurrency and latency at the edge is described using a three-degree polynomial regression model shown in equation (2) below:

$$Y_c = \delta \times L^3_{edge} + \alpha \times L^2_{edge} + \beta \times L_{edge} + \gamma \ (2)$$

where $Y_c$ represents maximum number of concurrent operations supported by edge with a latency less than $L_{edge}$, $\delta$, $\alpha$, $\beta$, and $\gamma$ are load balancing parameters. The optimum value of the unknowns ( $\delta$, $\alpha$, $\beta$ and $\gamma$ ) can be found out by solving a regression least square method based on the data point. The optimum value of the load balancing parameters is shown in Table 1 below:

Table 1

| Device | $\gamma$ | $\delta$ | $\alpha$ | $\beta$ | RMSE |
|---|---|---|---|---|---|
| Edge | -2.093 | 11.333 | -28.548 | 31.591 | 0.4 |

From Table 1, the load balancer's ability to forecast the maximum number of concurrent video feeds ($Y_{max}$), particularly those with large aspect ratios that the edge device can process within SLA latency ($L_{SLA}$), becomes evident. This predictive capability is crucial for effectively managing the processing workload between the edge and the cloud. When the edge device reaches its maximum concurrency limit $Y_{max}$ that can be executed within SLA latency $L_{SLA}$ as forecasted by the load balancer, additional feeds are seamlessly offloaded to the cloud. Here, a robust infrastructure running both nano and large MOT models concurrently takes over, ensuring that the SLA's stringent performance objectives are continuously met. For video feeds characterized by smaller aspect ratios, which typically require more detailed analysis, the system of the present disclosure bypasses local processing at the edge device entirely to avoid SLA violations due to high processing time. Instead, these feeds are directly sent to the cloud, where advanced processing capabilities can better handle their complexity, thus enhancing the accuracy and the execution speed of the multi-object tracking. This strategic distribution of tasks not only optimizes the utilization of computing resources across the edge and cloud but also minimizes response times and the cost of the deployment. Because only selected feeds are intelligently deployed to the cloud for processing, not all feeds are sent directly to the cloud. As a result, the system of the present disclosure adheres more strictly to SLA requirements, providing a reliable and efficient multi-object tracking service. By intelligently balancing processing loads based on the content characteristics and computational intensity of each feed, this approach significantly enhances both the scalability and performance of the method of the present disclosure, making it highly effective for deployment in diverse real-world scenarios.

The entire method of workload deployment in a content guided and service level agreement (SLA) aware edge-cloud architecture is further better understood by way of following pseudocode provided as example:

1. **Input:** Total number of camera feeds $N$, SLA latency $L_{SLA}$, Load balancer (LB) parameters

2. **Output:** Processed camera feeds using MOT algorithm within SLA

3. $i \leftarrow 0$

4. Perform feature extraction on all $N$ camera feeds

5. Segregate camera feeds into large and small object content feeds

6. *large feeds* ← feeds with large objects

7. *small feeds* ← feeds with small objects

8. *M* ← LB decides the maximum concurrency of feeds contains large objects at edge within $L_{SLA}$

9. **while** $i < N$ **do**

10. *SLA_met* ← LB checks if processing *M* camera feeds at edge meets SLA

11. **if** *SLA_met* **then**

12. **for** each feed *f* in *large feeds* up to *M* feeds **do**

13. Process camera feed f locally at the edge using lightweight MOT model

14. $i \leftarrow i + 1$

15. **end for**

16. **for** each feed *f* in *small feeds* or remaining *large feeds* if $i < N$ **do**

17. Transfer camera feed *f* to the cloud via MQTT via 5G internet

18. Process in the cloud using robust MOT algorithm to handle complexity of the and maintain $L_{SLA}$

19. $i \leftarrow i + 1$

20. **end for**

21. **end if**

22. **end while**

In an embodiment, a cost framework for implementing the edge-cloud architecture in a real-time setup employing AWS® cloud platforms is provided. The migration of edge workload to the cloud for processing incurs an additional cost. A robust cost model can be useful in estimating the cost of cloud deployment using various services. Furthermore, cost models provide a systematic and quantitative method for comparing various architectural design schemes. A cost model can be used to find a trade-off between performance and cost by selecting the appropriate network bandwidth, storage service configuration, EC2 machine types, service configuration, and/or the like. The expense framework involves the utilization of two cloud services and a comparative examination based on the deployment structure. For AWS® deployment, Kinesis Video Stream, Simple Storage Service (S3), EC2 instances, and/or the like, are employed. In the edge-cloud architecture of the present disclosure, the total cost can be defined as shown in equation (3) below:

$$C_{total} = C_{edge} + \sum_{i=1}^{S} C_i \quad (3)$$

Here, $C_{edge}$ represents a fixed cost of the edge device, $C_i$ signifies each cloud service cost of the deployment architecture, and *S* indicates the number of services utilized for deployment on a specific cloud provider. The primary focus is on estimating costs related to cloud deployment scenarios as it varies with the incoming loads. However, the cost of each cloud service $C_i$ is contingent upon various sub-factors such as functions, storage, region, network, and/or the like. The present disclosure aims to focus on the dynamic cloud cost only. The cost due to various cloud services used in the deployment architecture is calculated as follows:

**A. AWS® IoT Core:** The cost of utilizing a core on AWS® is determined by various factors. Firstly, there is a charge for messaging, which depends on the number of messages transmitted from edge devices to the AWS® Core. Each message incurs a cost, denoted by $R_{message}$. Additionally, there are costs associated with the utilization of rules and actions within the Core environment. Rules are used to process incoming messages and trigger actions accordingly, with each rule evaluation incurring a cost represented by $R_{rule}$. Similarly, actions triggered by rules, such as storing data or invoking functions, have associated costs denoted by $R_{action}$. Furthermore, there are connection costs involved in maintaining the connection between edge devices and the Core service, represented by $R_{connection}$. The cost of AWS® core is calculated as per equation (4) shown below:

$$C_{IoTcore} = m \times K \times L \times R_{message} + m \times K \times L \times R_{rule} + m \times K \times L \times$$

$$R_{action} + T \times R_{connection} \quad (4)$$

Where, $m$, $K$, $L$ represent number of the edge devices, total messages, and average billable messages respectively. Usually, $L$ can be computed as $D_a/billed\_meter$, where $D_a$ is the average data size of each message. The *billed_meter* is minimal size of the data taken as a message and it depends on the cloud service provider. Additionally, the duration of device operation ($T$) plays a role in determining the total cost.

**B. Kinesis FireHose:** For Kinesis Firehose service, the cost can be expressed as shown in equation (5) below:

$$C_{kinesis} = m \times K \times D_a \times R_{kinesis} \quad (5)$$

Here, $R_{kinesis}$ denotes the cost of the Kinesis Firehose service, typically charged on a per gigabyte (GB) basis.

**C. AWS® Storage S3:** Upon the arrival of data at the AWS® live video storage service, it is then stored across the storage services of various cloud providers. The cost of storage, denoted as $C_{S3}$, primarily depends on the cloud vendor and their specific storage operations, including data reading and writing activities. The storage cost can be effectively estimated using the equation (6) shown below:

$$C_{S3} = D_{storage} \times R_{storage} + (n_p + n_l + n_c) \times R_{request} + D_{out} \times R_{out} \quad (6)$$

Here, $D_{storage}$ represents total amount of data stored in AWS® S3, expressed in GB and charged $R_{storage}$ per GB basis while $n_p$, $n_l$, and $n_c$ are the number of *PUT, LIST,* and *COPY* requests respectively. The variable $R_{request}$ denotes a cost incurred per storage operation request. Additionally, $D_{out}$ signifies volume of data transferred out from one region to another, and $R_{out}$ is associated cost per GB for outbound data transfer. Notably, the cost for data transfer within the same region (i.e., intra-location) is zero, thereby avoiding additional charges for local data movements.

**D. AWS® EC2 Computation Cost:** Apart from the aforementioned costs involved in deploying applications, there is a cost associated with computing the method of the present disclosure. Typically, this is billed on an hourly basis to execute the computation algorithm. The cost for EC2 instances in AWS® can be expressed as shown in equation (7) below:

$$C_{compute\_i} = T \times R_{instance\_i} \quad (7)$$

Here, $T$ represents total time consumed to execute a function/application in that instance as a unit of hour, and $R_{instance\_i}$ is cost of the $i^{th}$ instance on an hourly basis. During the implementation of the workflow, $I$ computational instances have been utilized. Therefore, the total computational cost incurred can be calculated as shown in equation (8) below:

$$C_{compute\_t} = \sum_{i=1}^{I} C_{compute\_i} \quad (8)$$

Here, $C_{compute\_t}$ represents total computational cost, and $C_{compute\_i}$ represents computational cost of the $i^{th}$ instance.

## EXPERIMENTAL SETUP

In an embodiment, the infrastructure and cloud services that are used in experimental analysis of the method of the present disclosure are illustrated.

**A. Hardware Setup at Edge:** In realizing the edge-cloud architecture, a standard CPU-based laptop is used as the edge device in the present disclosure. This laptop is equipped with four physical Intel® i5 processors, each running at a clock frequency of 2.70GHz. To design a prototype of the edge-cloud architecture within an in-house lab environment, multiple camera sensors were utilized. This setup provides adequate computational power to capture live feed in real time and efficiently transfer it to the cloud. During the experiments, no additional load had been deployed in the edge device. At edge, a lightweight Yolov8n-DeepSORT algorithm is deployed with size of approximately 6 megabytes (MB).

**B. Network Setup:** For the real-time communication between the edge and the cloud network, technology is utilized. Specifically, the transfer of captured image data to the cloud network was facilitated using the MQTT protocol, operating over a high-speed 5G network. The connection between the edge device and the cloud was secured with protected certification, ensuring safety and confidentiality as provided by the cloud service provider. Once this secure communication link was established, the edge could seamlessly communicate and transfer data to the cloud network without interruption.

**C. Cloud Setup in AWS®:** For the execution of the MCS-MOT algorithm, an amazon web services (AWS®) cloud infrastructure is used. The edge device was integrated with the cloud network using AWS® Greengrass services, ensuring a high-speed and secure connection. The live video frames captured by the edge device were first encoded using a base64 technique and then transmitted to AWS® IoT Core services. The base64 encoding method efficiently converts frame integer arrays into a compact string, significantly reducing the data size (to just a few KBs) and enabling rapid transfer with minimal latency, even over low-bandwidth network connections via MQTT. This encoding is efficient in reducing the heavy data transfer from edge to the cloud network. Upon arrival in the AWS® cloud network, the data was streamed to an Amazon® simple storage service (S3) bucket using an AWS® Kinesis Firehose service. Here, Kinesis Firehose is used as a streamlined flow of data from core to S3. The Yolo-DeepSORT algorithm was deployed on an AWS® Elastic Compute (EC2) instance, specifically a g4dn.xlarge instance for the experimental purposes. The instance is T4 general processing unit (GPU) enabled along with 4 CPU cores. The cloud network has both large and small model of YOLO-DeepSORT to be applied based on the camera feed feature. The size of the YOlOv8x large model is 131 MB. This setup allowed for real-time decoding of image data from encoded strings and tracking of objects within these frames. For the tracking of the objects, the YOLO-DeepSORT algorithm is running continuously on the EC2 instance. The results of this tracking process were then stored back in the S3 bucket. For scenarios involving multiple cameras, multiple EC2 instances will be established to be spawned based on the SLA objective to be maintained while running. Additionally, to facilitate live visualization of the tracking results, a user interface tool is developed using the Python® Streamlit framework. This tool was hosted on a free-tier EC2 instance (t2.micro), functioning as a web server to present the tracking outcomes on a proper HTTP website. The biggest advantages of AWS® is that it allows users to access and visualize the results from any location globally.

**EXPERIMENTAL ANALYSIS:**

In the present disclosure, experiments to evaluate the performance of edge-only and multi-sensor-based architecture are described. Also, accuracy of the cost model of the present disclosure is evaluated followed by scalability and performance analysis of the edge-cloud architecture.

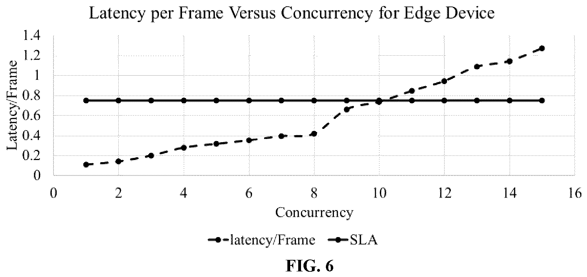

**A. Performance Analysis of Edge Only Architecture:** In the experiment, the MCS-MOT algorithm is deployed using the YOLOv8n-DeepSORT algorithm on an edge device, processing multiple concurrent camera feeds. FIG. 6 depicts graphical representations illustrating results of edge-only execution study system in terms of latency per frame and concurrency for workload deployment in a content guided and service level agreement (SLA) aware edge-cloud architecture, according to some embodiments of the present disclosure. In FIG. 6, the solid line indicates an SLA threshold of 0.75 and it is illustrated that the edge device maximum cater concurrency of 15 camera feeds within its resource constraints limits. More than that the edge device fails to handle the concurrent request. However, the data clearly shows that the system of the present disclosure maintains compliance with the SLA up to a concurrency level of 10. Beyond this point, the SLA is violated, indicating a need to offload additional camera feed to the cloud for processing to maintain the SLA. Hence, this proves the need for an edge-cloud ecosystem to be useful in maintaining SLA. However, the large MOT YOLOv8xDeepSORT model is not fitted to this edge device, so it was discarded for this edge concurrent study.

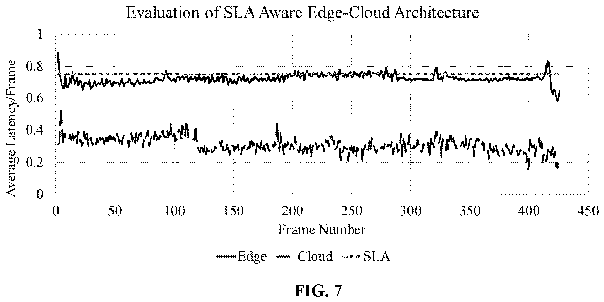

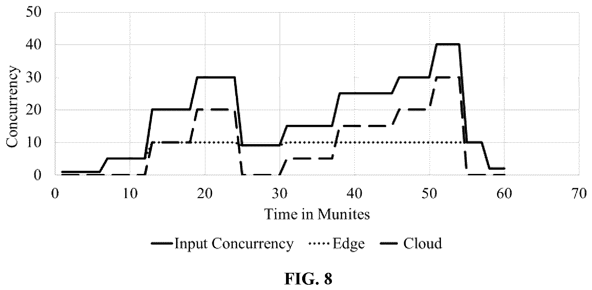

**B. Scalability and Performance Analysis of the Edge-Cloud architecture of the system 100:** To demonstrate the efficiency of method of the present disclosure, experiment were initiated with 15 concurrent camera feeds directed to the edge device, comprising a mix of small and large object content. The SLA was set at 0.75 seconds per frame. Initially, the edge device classified the video feeds using a feature extraction technique to determine whether they contain large or small objects. To balance the concurrent load between the edge and cloud, SLA objectives were used in equation 2 with the optimal values from Table 1. It is observed that the edge device could support a maximum concurrency of approximately 10 feeds for large object content. The remaining 5 camera feeds are transferred to the cloud, where the architecture of the present disclosure processes them on EC2 instances using the larger YOLOv8x-DeepSORT model. This setup demonstrates the maximum efficiency of the algorithm in the cloud environment. The YOLOv8n-DeepSORT model can also be used for large object content if the edge cannot handle the concurrency within the SLA, and the larger model can be used for small object content due to the cloud's flexibility and larger deployment options to maintain the SLA. FIG. 7 depicts graphical representations illustrating service level agreement (SLA)-aware execution results of the edge-cloud architecture in terms of average latency per frame and frame number for 15 concurrent workloads deployment, according to some embodiments of the present disclosure. As shown in FIG. 7, the average latency per frame was calculated for both the edge and the cloud. For the edge, the average timing per frame was calculated for 10 feeds, and for the cloud, it was calculated for 5 feeds. The results show that both the edge and cloud systems respond within the SLA for each frame, based on the respective algorithms determined by feature extraction. The cloud average latency per frame includes the communication time to send data from the edge to the cloud and an additional 0.1 seconds to account for any uncertainties. Despite this, the latency per frame remains within the specified SLA. FIG. 8 depicts graphical representations illustrating load balancing between edge and cloud-based on incoming dynamic camera feed load for workloads deployment in a content guided and service level agreement (SLA) aware edge-cloud architecture, according to some embodiments of the present disclosure. Moreover, FIG. 8 demonstrates how the load balancer manages the dynamic camera feed workload between the edge and cloud while maintaining the SLA of 0.75 seconds per frame. It shows that the edge device can handle up to 10 concurrent feeds. When the number of feeds exceeds 10, the additional feeds are processed in the cloud. However, as the workload decreases, the system dynamically adjusts and reduces the reliance on cloud processing. This demonstrates the robustness and efficiency of the method of the present disclosure in handling mixed video feeds while adhering to stringent SLA requirements, making it suitable for industrial deployments.

**C. Cost Analysis of proposed single camera sensor-based architecture set up in AWS®:** In this study, a detailed cost analysis is conducted for the edge-cloud architecture for a single camera sensor feed (here $m = 1$) in the AWS® ap-south-1 (Mumbai) region. The execution cost is comprehensively determined based on various AWS® services and their associated usage for an hour of the execution. The calculation begins by examining the data transfer from the edge device to AWS® Core. Table 2 below provides data transfer details from edge to AWS® core.

Table 2

| Video frame Size (KB) | Time to upload (s) | Data transfer per hour (GB) | No of image frame per hour |
|---|---|---|---|
| 86 | 0.15 | 1.92 | 23598 |

For AWS® Core, a detailed cost calculation is conducted to estimate the expenses associated with device connectivity, message handling, and rules engine operations through equation (9) as follows:

1. Device connectivity cost ($R_{connection}$): It is considered that one device is connected continuously throughout the month, accruing a total of 43, 800 minutes. The cost for connectivity is significantly low at 0.092 USD per million (M) minute and hence this cost is ignored.

2. Messaging cost ($R_{message}$): Since AWS® IoT core bills messages in 5 KB increments, each 86 KB message is treated as average (86/5) = ~ 18 billable messages. The cost of AWS® IoT core for publishing messages is 1.05 USD per million(M) messages.

3. Rule engine $\text{cost}\left( R_{rule} / R_{action} \right)$ : The rules engine which is integral to processing and responding to incoming data, is triggered 23598 times in one hour. Each rule triggers one action leading to an equivalent number of billable actions. Each rule and action are charged at the rate of 0.158 USD per million rule/action triggered. Therefore, the estimated cost for AWS® IoT core based on the equation 4 is shown in equation (9) below as:

$$C_{IoTcore} = 1 \times 23598 \times 18 \times 1.05 \times 10 - 6 + 1 \times 23598 \times 18 \times$$
$$0.158 \times 10 - 6 + 1 \times 23598 \times 18 \times 0.158 \times 10 - 6 = 0.59 \,(9)$$

Also, from the actual experiment, the same cost for the AWS® IoT core service is observed. To estimate the cost of data streaming via AWS® Firehose, charges are applied based on the volume of data injected. The kinesis Firehose charges 0.034 USD per GB ($R_{kinesis}$) data injection. As detailed in equation (5), the estimated cost was calculated as shown in equation (10) below:

$$C_{kinesis} = (1 \times 23598 \times 86/1024/1024) \times 0.034 = 0.0658 \,(10)$$

This division by 1024 is done to make the data in GB. During practical operations, the actual cost incurred was slightly higher at 0.0678 USD per hour. This variance between the estimated and actual costs is minimal, demonstrating the reliability of the cost estimation model of the present disclosure. In evaluation of AWS® S3 Standard storage for an optimal balance of accessibility and cost, initially 1.92 GB of data was stored, with the storage cost calculated at $0.023 per GB. Alongside storage, an EC2 instance was utilized to monitor and manage data interactions. This setup involved periodic checks to determine if new data had arrived. Upon detection of new data, read operations were executed to fetch data from S3 and downloaded to the local storage of the EC2 instance for processing. Post-processing, the results were written back to S3, necessitating write operations. During one hour of system operation, a total of 858 list operations, 23,598 disk writes, and 1, 902 read operations were recorded. The AWS® S3 charges 0.000005 USD per request ($R_{request}$). Here, the data is moved within the region so the outbound data ($D_{out}$) is assumed to be zero. Hence, with references to equation (6), the cost involved for S3 leading to an estimated operational cost is estimated to be as shown in equation (11) below:

$$C_{S3} = 1.92 \times 0.023 + (858 + 23, 598 + 1, 902) \times 5106 = 0.18 \,(11)$$

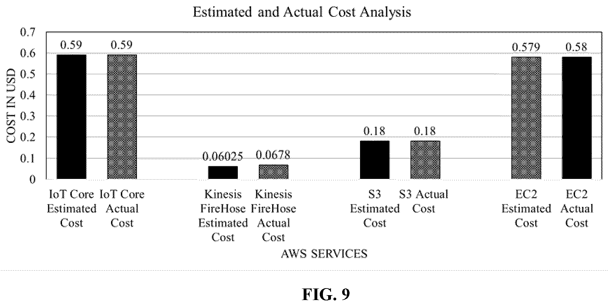

Also, only one EC2 instance (i.e., *g4dn.xlarge*) was used which costs around 0.579 USD per hr. FIG. 9 depicts graphical representations illustrating estimated and actual cost analysis of single Camera Feed multi-camera sensor-based multi-object tracking (MCS-MOT) algorithm for workload deployment in a content guided and service level agreement (SLA) aware edge-cloud architecture, according to some embodiments of the present disclosure. As illustrated in FIG. 9, the cost estimate shown in equation (11) was precisely corroborated by the actual costs incurred, affirming the accuracy of the cost estimation model and the efficiency of cloud-based data handling strategy of the present disclosure. Therefore, this analysis demonstrates that the same equations can be seamlessly applied to estimate the cost of scalable operations for multi-camera feed sensors by using appropriate data measurements.

**D. Performance vs Cost vs Concurrency Trade-off:** In the present disclosure, the performance and cost trade-offs of cloud services were evaluated within the dynamic camera feed workload of the edge-cloud architecture. The edge-cloud architecture utilizes scalable AWS® services such as AWS® IoT Core and Kinesis Firehose, with the method of present disclosure deployed on EC2 instances for computation. Table 3 provides different types of general processing unit (GPU) instances and their configuration.

Table 3

| Instance name | GPU | vCPU | GPU Memory (GB) | Price (USD/hr) |
|---|---|---|---|---|
| *g4dn.xlarge* | 1 | 4 | 16 | 0.579 |
| *g4dn.2xlarge* | 1 | 8 | 16 | 0.828 |
| *g5.xlarge* | 1 | 4 | 24 | 1.208 |

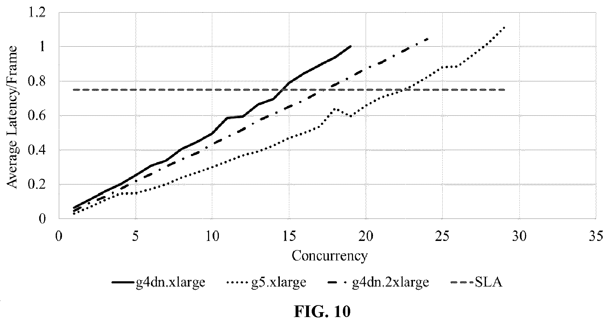

As shown in Table 3, three different types of GPU instances named *g4dn.xlarge* (I), *g4dn.2xlarge* (II) and *g5.xlarge* (III) were used. Total cost per inference is calculated using the cost model of the present disclosure. FIG. 10 depicts graphical representations illustrating per-frame latency and on-demand cost per hour for varying concurrency observed with three different types of EC2 instances I, II, and III for workload deployment in a content guided and service level agreement (SLA) aware edge-cloud architecture, according to some embodiments of the present disclosure. As shown in the FIG. 10, for a given $L_{SLA}$ = 0.75, it is observed that I, II, and III can serve a maximum of 15, 18, and 23 concurrencies at the rate of 0.579, 0.828, and 1.208 USD per hour respectively. Also, it is seen that for a given concurrency, maximum latency is observed with instance type I while type III instance delivers better latency at a higher cost. Based on the above observations/analysis, it can be concluded that the cost model of the present disclosure in conjunction with the load-balancer in the present disclosure can assist in maintaining cost and performance trade-offs.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

The present disclosure provides an innovative and scalable edge-cloud architecture for MCS-MOT applications. An SLA-aware MCS-MOT system is designed in the present disclosure that leverages content-guided camera feed features to balance the processing of dynamic incoming feeds between edge and cloud ecosystems. Efficient communication is achieved through the high-speed MQTT protocol, empowered by a 5G internet connection. In the present disclosure, cost estimation is implemented for this edge-cloud architecture to handle unforeseen concurrent load injections. Evaluation showed that the edge-cloud architecture outperforms edge-only deployments in terms of latency and throughput within the specified SLA. Additionally, the system of the present disclosure provides cost benefits based on the incoming camera feed, ensuring cost-effectiveness. This edge-cloud codesign can be leveraged in various deployment applications such as robotics, embedded systems, and mobile robotics. Furthermore, multi-cloud deployment with different vendors to optimize cost benefits and performance for real-time industrial applications can be explored.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an applicationspecific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

## Claims

1.  A processor implemented method (200), the method comprising:

    receiving (202), via on or more hardware processors, a plurality of real time incoming data acquired by one or more camera sensors across a plurality of locations for workload deployment;
    extracting (204), via the one or more hardware processors, a plurality of features from the plurality of real time incoming data using one or more feature extraction techniques;
    identifying (206), via the one or more hardware processors, one or more objects in the plurality of real time incoming data based on the plurality of features;
    classifying (208), via the one or more hardware processors, the plurality of real time incoming data into one of (i) a first classification category, and (ii) a second classification category, based on a size parameter of each of the one or more objects using one or more classification approaches;
    inputting (210), via the one or more hardware processors, the plurality of real time incoming data classified as one of (i) the first classification category and (ii) the second classification category to an edge-cloud architecture; and

dynamically allocating (212), via the one or more hardware processors, the plurality of real time incoming data to one of: (a) an edge, and (b) a cloud network comprised in the edge-cloud architecture for the workload deployment, using a load balancer based on (i) the first classification category and (ii) the second classification category of the plurality of real time incoming data, wherein the load balancer is a regression model characterized as: $Y_c = \delta \times L_{edge}^3 + \alpha \times L_{edge}^2 + \beta \times L_{edge} + \gamma$ , where $Y_c$ represents maximum number of concurrent operations supported by the edge with a latency less than $L_{edge}$, $\delta$, $\alpha$, $\beta$, and $\gamma$ are load balancing parameters, and wherein dynamic allocation of the plurality of real time incoming data using the load balancer ensures that optimal processing of the plurality of real time incoming data is performed with optimum resource utilization while satisfying one or more user specified objectives.

2. The processor implemented method as claimed in claim 1, wherein the step of classifying the plurality of real time incoming data enables content guided resource utilization to identify an optimal processing location in the edge-cloud architecture.

3. The processor implemented method as claimed in claim 1, wherein the one or more user specified objectives include at least one (i) a service level agreement (SLA), (ii) a minimum response time, (iii) one or more latency constraints set by the SLA, and (iv) a minimum cost of the workload deployment.

4. The processor implemented method as claimed in claim 1, wherein the edge comprises one or more lightweight models.

5. The processor implemented method as claimed in claim 1, wherein the cloud network comprises one or more heavyweight models that enable fast processing of the plurality of real time incoming data.

6. The processor implemented method as claimed in claim 1, wherein the edge-cloud architecture is scalable and cost-effective.

7. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive a plurality of real time incoming data acquired by one or more camera sensors across a plurality of locations for workload deployment;
extract a plurality of features from the plurality of real time incoming data using one or more feature extraction techniques;
identify one or more objects in the plurality of real time incoming data based on the plurality of features;
classify the plurality of real time incoming data into one of (i) a first classification category and (ii) a second classification category, based on a size parameter of each of the one or more objects using one or more classification approaches;
input the plurality of real time incoming data classified as one of (i) the first classification category and (ii) the second classification category to an edge-cloud architecture; and
dynamically allocate the plurality of real time incoming data to one of: (a) an edge, and (b) a cloud network comprised in the edge-cloud architecture for the workload deployment, using a load balancer based on (i) the first classification category and (ii) the second classification category of the plurality of real time incoming data, wherein the load balancer is a regression model characterized as: $Y_c = \delta \times L_{edge}^3 + \alpha \times L_{edge}^2 + \beta \times L_{edge} + \gamma$, where $Y_c$ represents maximum number of concurrent operations supported by the edge with a latency less than $L_{edge}$, $\delta$, $\alpha$, $\beta$, and $\gamma$ are load balancing parameters, and wherein dynamic allocation of the plurality of real time incoming data using the load balancer ensures that optimal processing of the plurality of real time incoming data is performed with optimum resource utilization while satisfying one or more user specified objectives.

8. The system as claimed in claim 7, wherein the step of classifying the plurality of real time incoming data enables content guided resource utilization to identify an optimal processing location in the edge-cloud architecture.

9. The system as claimed in claim 7, wherein the one or more user specified objectives include at least one (i) a service level agreement (SLA), (ii) a minimum response time, (iii) one or more latency constraints set by the SLA, and (iv) a minimum cost of the workload deployment.

10. The system as claimed in claim 7, wherein the edge comprises one or more lightweight models.

11. The system as claimed in claim 7, wherein the cloud network comprises one or more heavyweight models that enable fast processing of the plurality of real time incoming data.

12. The system as claimed in claim 7, wherein the edge-cloud architecture is scalable and cost-effective.

13. One or more non-transitory machine-readable information storage mediums comprising one or more instructions which when executed by one or more hardware processors cause:

receiving a plurality of real time incoming data acquired by one or more camera sensors across a plurality of locations for workload deployment;
extracting a plurality of features from the plurality of real time incoming data using one or more feature extraction techniques;
identifying one or more objects in the plurality of real time incoming data based on the plurality of features;
classifying the plurality of real time incoming data into one of (i) a first classification category, and (ii) a second classification category, based on a size parameter of each of the one or more objects using one or more classification approaches;
inputting the plurality of real time incoming data classified as one of (i) the first classification category and (ii) the second classification category to an edge-cloud architecture; and
dynamically allocating the plurality of real time incoming data to one of: (a) an edge, and (b) a cloud network comprised in the edge-cloud architecture for the workload deployment, using a load balancer based on (i) the first classification category and (ii) the second classification category of the plurality of real time incoming data, wherein the load balancer is a regression model characterized as:

$$Y_c = \delta \times L_{edge}^3 + \alpha \times L_{edge}^2 + \beta \times L_{edge} + \gamma$$, where $Y_c$ represents maximum number of concurrent operations supported by the edge with a latency less than $L_{edge}$, $\delta$, $\alpha$, $\beta$, and $\gamma$ are load balancing parameters, and wherein dynamic allocation of the plurality of real time incoming data using the load balancer ensures that optimal processing of the plurality of real time incoming data is performed with optimum resource utilization while satisfying one or more user specified objectives.

14. The one or more non-transitory machine-readable information storage mediums as claimed in claim 13, wherein the step of classifying the plurality of real time incoming data enables content guided resource utilization to identify an optimal processing location in the edge-cloud architecture.

15. The one or more non-transitory machine-readable information storage mediums as claimed in claim 13, wherein the one or more user specified objectives include at least one (i) a service level agreement (SLA), (ii) a minimum response time, (iii) one or more latency constraints set by the SLA, and (iv) a minimum cost of the workload deployment, wherein the edge comprises one or more lightweight models, wherein the cloud network comprises one or more heavyweight models that enable fast processing of the plurality of real time incoming data, and wherein the edge-cloud architecture is scalable and cost-effective.

System **100**

**108**

Memory **102**

Modules **102a**

Repository **102b**

I/O interface(s) **106**

Hardware
processor(s) **104**

**FIG. 1**

**FIG. 2**

**FIG. 3**

Receiving, via on or more hardware processors, a plurality of real time incoming data acquired by one or more camera sensors across a plurality of locations for workload deployment — 202

Extracting, via the one or more hardware processors, a plurality of features from the plurality of real time incoming data using one or more feature extraction techniques — 204

Identifying, via the one or more hardware processors, one or more objects in the plurality of real time incoming data based on the plurality of features — 206

classifying, via the one or more hardware processors, the plurality of real time incoming data into one of (i) a first classification category and (ii) a second classification category, based on a size parameter of each of the one or more objects using one or more classification approaches — 208

inputting, via the one or more hardware processors, the plurality of real time incoming data classified as one of (i) the first classification category and (ii) the second classification category to an edge-cloud architecture — 210

dynamically allocating, via the one or more hardware processors, the plurality of real time incoming data to one of: (a) an edge, and (b) a cloud network comprised in the edge-cloud architecture for the workload deployment, using a load balancer based on (i) the first classification category and (ii) the second classification category of the plurality of real time incoming data, wherein the load balancer is a regression model characterized as: $Y_c = \delta \times L^3_{edge} + \alpha \times L^2_{edge} + \beta \times L_{edge} + \gamma$, where $Y_c$ represents maximum number of concurrent operations supported by the edge with a latency less than $L_{edge}$, $\delta$, $\alpha$, $\beta$, and $\gamma$ are load balancing parameters, and wherein dynamic allocation of the plurality of real time incoming data using the load balancer ensures that optimal processing of the plurality of real time incoming data is performed with optimum resource utilization while satisfying one or more user specified objectives — 212

200

**FIG. 4**

FIG.5A

FIG.5B

**FIG.5C**

**FIG.5D**

Latency per Frame Versus Concurrency for Edge Device

FIG. 6

Evaluation of SLA Aware Edge-Cloud Architecture

—Edge — Cloud ---SLA

**FIG. 7**

**FIG. 8**

FIG. 9

**FIG. 10**

Europäisches
Patentamt

European
Patent Office

Office européen
des brevets

## EUROPEAN SEARCH REPORT

**Application Number**

**EP 25 20 2207**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | SAHA RATUL KISHORE ET AL: "Scalable and Cost-Effective Edge-Cloud Deployment for Multi-Object Tracking System", 2024 IEEE INTERNATIONAL CONFERENCE ON CLOUD ENGINEERING (IC2E), IEEE, 24 September 2024 (2024-09-24), pages 211-220, XP034753060, DOI: 10.1109/IC2E61754.2024.00031 [retrieved on 2024-11-14] * the whole document * | 1-15 | INV. G06F9/50 |
| A | YANG ZHENG ET AL: "EdgeDuet: Tiling Small Object Detection for Edge Assisted Autonomous Mobile Vision", IEEE /ACM TRANSACTIONS ON NETWORKING, IEEE / ACM, NEW YORK, NY, US, vol. 31, no. 4, 1 August 2023 (2023-08-01), pages 1765-1778, XP011947200, ISSN: 1063-6692, DOI: 10.1109/TNET.2022.3223412 [retrieved on 2022-12-02] * abstract * * Section IV-A.1 * | 1-15 | **TECHNICAL FIELDS SEARCHED (IPC)** G06F |

The present search report has been drawn up for all claims

| Place of search | Date of completion of the search | Examiner |
|---|---|---|
| The Hague | 21 January 2026 | Dieben, Marc |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

    ................................................................................
& : member of the same patent family, corresponding
   document

EPO FORM 1503 03.82 (P04C01)

**REFERENCES CITED IN THE DESCRIPTION**

**Patent documents cited in the description**

- IN 202421071881